# EUROPÄISCHE PATENTSCHRIFT

(11) **EP 1 671 190 B1**
(45) Veröffentlichungstag und Bekanntmachung des Hinweises auf die Patenterteilung: **08.12.2010**
(21) Anmeldenummer: 04790143.4
(22) Anmeldetag: 06.10.2004
(51) Int. Cl.: G05B 19/042

(54) **FUNKTIONSBLOCK FÜR FELDGERÄTE DER PROZESSAUTOMATISIERUNGSTECHNIK**
FUNCTIONAL BLOCK FOR FIELD DEVICES USED IN PROCESS AUTOMATION TECHNOLOGY
BLOC FONCTIONNEL POUR APPAREILS DE CHAMPS UTILISES EN TECHNOLOGIE D'AUTOMATISATION DES PROCESSUS

(30) Priorität: 07.10.2003 DE 10347007
(43) Veröffentlichungstag der Anmeldung: 21.06.2006
(73) Patentinhaber: Endress + Hauser Process Solutions AG, 4153 Reinach BL (CH)
(72) Erfinder: DA SILVA NETO, Eugenio Ferreira, CH-4105 Biel-Benken (CH)
(74) Vertreter: Andres, Angelika Maria
(86) Internationale Anmeldenummer: PCT/EP2004/011148
(87) Internationale Veröffentlichungsnummer: WO 2005/036284

(56) Entgegenhaltungen:
- US-A1- 2002 169 804
- MUSKINJA N ET AL: "Use of TCP/IP protocol in industrial environment" INDUSTRIAL TECHNOLOGY, 2003 IEEE INTERNATIONAL CONFERENCE ON MARIBOR, SLOVENIA DEC. 10-12, 2003, PISCATAWAY, NJ, USA,IEEE, Bd. 2, 10. Dezember 2003 (2003-12-10), Seiten 896-900, XP010698870 ISBN: 0-7803-7852-0
- SAMSON AG / V74 SCHULUNG: "Foundation Fieldbus" 11. Juni 2003 (2003-06-11), SAMSON AG , FRANKFURT A. M. , XP002331534 Gefunden im Internet: URL:http://web.archive.org/web/20030611083 934/http://www.samson.de/pdf_de/l454de.pdf > Seite 28 - Seite 31 Seite 36
- FIELDBUS FOUNDATION: "Fieldbus Facts Online" FIELDBUS FACTS ARCHIVE, Bd. 2, Nr. 9, September 2001 (2001-09), Seiten 1-2, XP002331533 Gefunden im Internet: URL:http://www.fieldbus.org/fieldbusfacts/ september2001/fieldbusfactssep01.html>
- PEE SUAT HOON ET AL: "Foundation<TM> fieldbus high speed ethernet (HSE) implementation" PROCEEDINGS OF THE 2002 IEEE INTERNATIONAL SYMPOSIUM ON INTELLIGENT CONTROL.(ISIC'02). VANCOUVER, CANADA, OCT. 27 - 30, 2002, IEEE INTERNATIONAL SYMPOSIUM ON INTELLIGENT CONTROL, NEW YORK, NY : IEEE, US, 27. Oktober 2002 (2002-10-27), Seiten 777-782, XP010623079 ISBN: 0-7803-7620-X

## Beschreibung

Die Erfindung betrifft einen Funktionsblock für Feldgeräte der Prozessautomatisierungstechnik. In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmesser, Massendurchflussmessgeräte, Druck- und Temperaturmessgeräte etc., die als Sensoren die entsprechende Prozessvariablen Füllstand, Durchfluss, Druck bzw. Temperatur erfassen.

Zur Beeinflussung von Prozessvariablen dienen sogenannte Aktoren z. B. Ventile, die den Durchfluss einer Flüssigkeit in einem Rohrleitungsabschnitt oder Pumpen, die den Füllstand in einem Behälter verändern.

Eine Vielzahl solcher Feldgeräte wird von der Fa. Endress+Hauser hergestellt und vertrieben.

In der Regel sind Feldgeräte in modernen Fabrikationsanlagen über einen Feldbus (Profibus®, Foundation® Fieldbus, etc.) mit Leitsystemen oder Steuereinheiten verbunden. Diese dienen zur Prozesssteuerung, Prozessvisualisierung, Prozessüberwachung sowie zur Konfigurierung und Parametrierung der Feldgeräte. Feldgeräte führen verschiedene Funktionen innerhalb der Prozesssteuerung aus. Für spezielle Standardfunktionen z.B- PID-Regler stehen sogenannte Funktionsblöcke mit definierten Kommunikationsschnittstellen zur Verfügung. Diese Funktionsblöcke bilden mit entsprechenden Algorithmen, die in den Mikroprozessoren der einzelnen Feldgeräte abgearbeitet werden, spezielle Anwendungsfunktionen ab.

Feldgeräte mit Mikroprozessoren werden auch als intelligente Feldgeräte bzw. smart field devices bezeichnet.

Ein wesentlicher Aspekt der Funktionsblöcke besteht darin, dass sie definierte Schnittstellen aufweisen und damit einfach zu komplexen Kontrollstrategien verknüpft werden können.

In den Foundation Fieldbus Spezifikationen, die öffentlich zugänglich sind, sind verschiedene Standardfunktionsblöcke spezifiziert. Typische Funktionsblöcke für Feldgeräte sind, "Analog Input" AI, "Analog Output" AO, "Discret Input" DI, Discret Output" DO, "PID-Control" PID. Neben diesen Basis-Funktionsblöcken gibt es noch spezielle Funktionsblöcke "Analog Alarm", "Arithmetic", Device Control".

Seit neuerem sind auch flexible Funktionsblöcke (Flexible Function Blocks) der Foundation Fieldbus spezifiziert, die frei nach der IEC-Norm 61131 programmierbar sind (z. B. Supervisory Data Acquisation).

In der IEC-Norm 61158 sind neben verschiedenen Feldbus-Systemen auch die Foundation® Fieldbus-Technologie spezifiziert ist.

Bevor ein Feldgerät in einer Prozeßumgebung eingesetzt werden kann, muss es konfiguriert und parametriert werden. Hierfür ist u. a. das Laden der Kontrollstrategie in die entsprechenden Feldgeräte notwendig.

Eine bekannte Applikation, die dies ermöglicht, ist das System SYSCON (Fa. SMAR). Mit dieser Applikation kann auch das korrekte Verschalten der einzelnen Funktionsblöcke sowie der zeitliche Ablauf der Kontrollstrategie getestet werden. Zum Ändern der Parameter eines Funktionsblocks muss dieser Funktionsblock zunächst innerhalb eines entsprechenden Bedienprogramms aufgerufen werden. Daraufhin können die im Bedienprogramm angezeigten Parameter dieses Funktionsblocks vom Anwender geändert werden. Müssen mehrer Parameter einer Kontrollschleife z.B. einer Kaskadenregelung geändert werden, so müssen die entsprechenden einzelnen Funktionsblöcke innerhalb des Bedienprogramms nacheinander gesucht, aufgerufen und die notwendigen Parameteränderungen vorgenommen werden.

Dies ist für den Anwender sehr aufwendig und zeitraubend.

Er muß auch um bestimmte Informationen von mehreren Funktionsblöcken zu prüfen, die entsprechenden Funktionsblöcke jeweils aufwendig einzeln aufrufen, die dann auf der Benutzeroberfläche des Bedienprogramms angezeigt werden.

Die US 2002/0 169 804 A1 beschreibt ein Verfahren zur Anpassung eines Bedieninterfaces, von Ereignismeldungen und/oder Messwertprotokollen von Internetfähigen Prozessgeräten wie Steuereinheiten (13, 23), Sensoren (14) und/oder Aktuatoren (15) an gegebene Betriebsbedingungen, die über Schnittstellen (3, 7, 20) und/oder Netzwerke miteinander verbunden und Bestandteil in einem prozessverarbeitenden System sind. Ferner wird eine Anordnung mit einem entsprechenden Bedieninterface beschrieben. Damit wird eine insbesondere für den Benutzer wesentlich einfachere Anpassung des Bedieninterfaces (oder von Ereignismeldungen und Messwertprotokollen) von Internet-fähigen Geräten in prozessverarbeitenden Systemen an neue Betriebsbedingungen möglich.

Aufgabe der vorliegenden Erfindung ist es eine Vorrichtung für Feldgeräte der Prozessautomatisierungstechnik anzugeben, die eine einfache Darstellung und Abänderung von Informationen aus einzelnen Funktionsblöcken ermöglicht.

Gelöst wird diese Aufgabe durch eine Vorrichtung für Feldgeräte der Prozessautomatisierungstechnik gemäß dem Anspruch 1.

Die wesentliche Idee der Erfindung besteht darin, in einen Funktionsblock für Feldgeräte der Prozessautomatisierungstechnik einen Web-Server zu integrieren und diesen Funktionsblock mit anderen Funktionsblöcken zu verknüpfen. So können Informationen von verschiedenen Funktionsblöcken in einem Web-Browser (z.Bsp. Netscape Navigator, Internet Explorer) dargestellt und wenn nötig von diesem Browser aus geändert werden.

Vorteilhafte Weiterentwicklungen sind in den Unteransprüchen angegeben.

In einer Ausgestaltung der Erfindung sind die Funktionsblöcke nach dem Foundation® Fieldbus Standard ausgebildet.

In einer weiteren Ausgestaltung der Erfindung sind die Funktionsblöcke nach dem Profibus® Standard ausgebildet.

In einer speziellen Ausgestaltung der Erfindung ist der Funktionsblock in einem Feldgerät oder einem Controller angeordnet.

Neben Konfigurationsinformationen können auch Diagnoseinformationen über den Web-Browser Funktionsblock abgerufen werden.

Nachfolgend ist die Erfindung anhand eines in der Zeichnung dargestellten Ausführungsbeispiels näher erläutert:

Es zeigen:
Fig. 1 Netzwerk der Prozessautomatisierungstechnik in schematischer Darstellung;
Fig. 2 Funktionsblock für Feldgeräte der Prozessautomatisierungstechnik, der mit weiteren Funktionsblöcken verbunden ist.

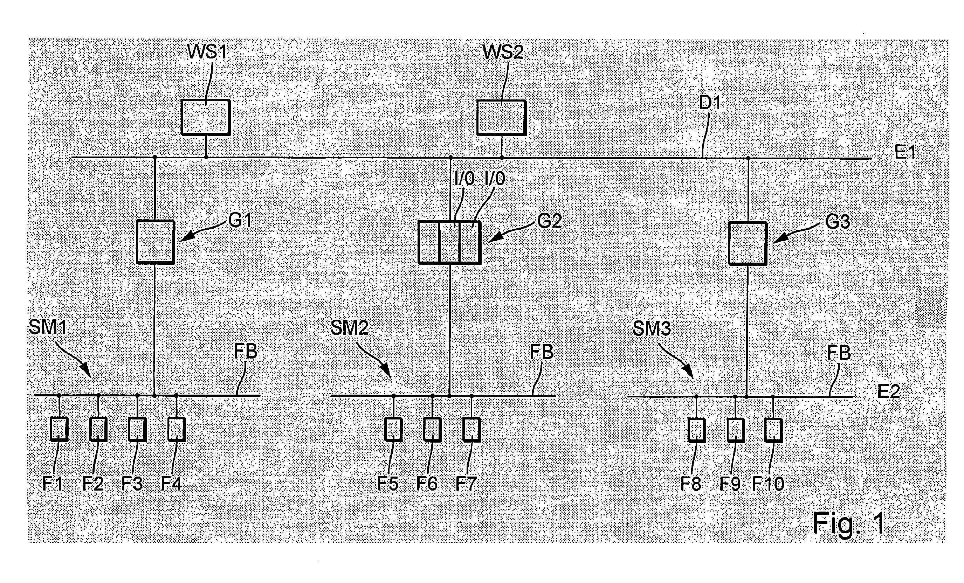

In Fig. 1 ist ein Netzwerk der Prozessautomatisierungstechnik näher dargestellt. An einen Datenbus D1 sind mehrere Leistsystemen bzw. Steuereinheiten (Workstations) WS1, WS2, die zur Prozessvisualisierung, Prozessüberwachung und zum Engineering dienen, angeschlossen. Der Datenbus D1 arbeitet z.B. nach dem HSE(High Speed Ethernet)-Standard der Foundation® Fieldbus. Über ein Gateway G1, das auch als Linking Device bezeichnet wird, ist der Datenbus D1 mit einem Feldbussegment SM1 verbunden.

Bei dem Gateway G1 kann es sich auch um einen Controller handeln.

Das Feldbussegment SM1 besteht aus mehreren Feldgeräten F1, F2, F3, F4, die über einen Feldbus FB1 miteinander verbunden sind. Neben dem Feldbusssegment SIM1 noch weitere Feldbussegmente SM2 und SM3 über entsprechende Gateways G2 bzw. G3 mit dem Datenbus D1 verbunden.

Das Feldbussegment SM2 weist die Feldgeräte F5, F6, F7 und das Feldbussegment SM3 die Feldgeräte F8, F9 und F10 auf.

Jeder dieser Feldbusse FB1, FB2, FB3 arbeitet nach dem Foundation® Fieldbus Standard.

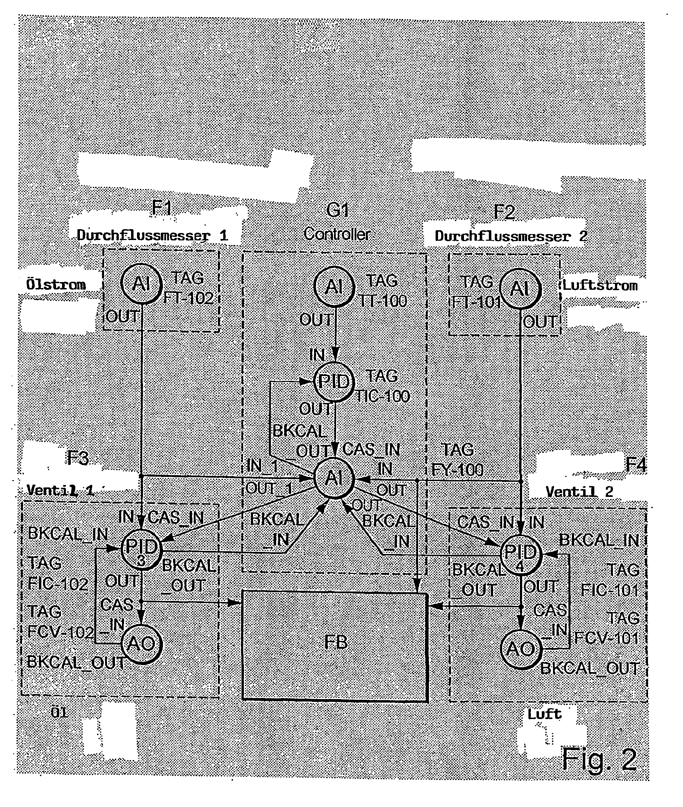

In Fig. 2 sind mehrer Funktionsblöcke Al Analog Input, PID PID-Regler, AO Analog Output und ein OSDL Output Splitter Double Limit und deren Verknüpfungen dargestellt. Auf die einzelnen Verknüpfungen wird nicht näher eingegangen, sie sind dem Fachmann geläufig. Bei der Kontrollstrategie handelt es sich um eine Steuerung für einen Verbrennungsofen, bei dem das Luft-Brennstoff-Verhältnis in vorgegebenen Grenzen wird. Gemessen und gesteuert wird der Luftdurchsatz und der Brennstoffdurchsatz. Hierfür sind zwei Durchflussmesser F1, F2 und zwei Stellventile F3, F4 jeweils in den entsprechenden Zuführleitungen für die Verbrennungsluft und den Brennstoff vorgesehen.

Der Funktionsblock OSDL ist im Controller G1 angeordnet. Weiterhin ist ein erfindungsgemäßer Funktionsblock FB vorgesehen, der mit dem Funktionsblock PID4 und PID3 sowie dem Funktionsblock OSDL5 verbunden ist. Der Funktionsblock FB weist einen Web-Server auf. Somit stehen dem Funktionsblock FB die Parameterwerte CAS-IN von drei Funktionsblöcken PID3, PID4 und OSDL5 zur Verfügung.

Nachfolgend ist die Funktionsweise der Erfindung näher erläutert. Mit Hilfe eines Web-Browsers kann von einer Steuereinheit z.B. WS1 auf den Funktionsblock FB zugegriffen werden. Der Funktionsblock FB, der einen Web-Server umfasst, stellt seine Informationen als HTML-Seiten in einer allgemeinen Beschreibungssprache zur Verfügung.

Die entsprechenden Informationen der anderen Funktionsblöcke sind so in einfacher Weise mit Hilfe eines Web-Browsers abrufbar und abänderbar.

Der Funktionsblock FB kann auch mit weiteren Funktionsblöcken z.B. FB2 und FB3 verknüpft werden, die jeweils ebenfalls einen Web-Server integriert haben. Diese Verknüpfungen zu anderen web-fähigen Funktionsblöcken werden im Browser als Hyperlinks dargestellt. Durch Anklicken dieser Hyperlinks wird der Anwender in einfacher Weise zu weiteren Funktionsblöcken geführt, deren Informationen dann im Browser-Fenster angezeigt werden.

Vom Browser-Fenster aus können so sehr einfach entsprechende Parameteränderungen vorgenommen werden.

Der Aufruf von Informationen von Funktionsblöcken für Feldgeräte der Prozessautomatisierungstechnik gestaltet sich somit erheblich einfacher. Auch können Parameteränderungen wesentlich einfacher durchgeführt werden.

Der Anwender wird sehr schnell über Hyperlinks zu den entsprechenden Informationen geführt und muss nicht aufwendig Baumstrukturen nach den gewünschten Informationen durchsuchen. Dies ist insbesondere für den ungeübten Anwender im Bereich der Feldbustechnik von enormer Bedeutung.

Der Funktionsblock FB ist wie jeder herkömmliche Funktionsblock mit anderen Funktionsblöcken verknüpfbar.

Wenn die Kontrollstrategie in die Feldgeräte geladen wird, wird auch der Funktionsblock FB am vorbestimmten Ort (Feldgerät oder Controller) instanziiert.

Ist der Funktionsblock FB in einem Controller G1 instanziiert, der eine Ethernet-Verbindung aufweist, so kann eine Anfrage vom Browser direkt via TCP/IP an den Web-Server im Funktionsblock FB gerichtet werden.

Ist der Funktionsblock FB jedoch in einem Feldgerät instanziiert, so muß die HTTP Anfrage über das Feldbusprotokoll zum Feldgerät transporttiert werden, was auch als Tunneln bezeichnet wird.

In gleicher Weise muß die Antwort vom Web-Server ebenfalls durch den Feldbus getunnelt werden.

Mit Hilfe der erfindungsgemäßen Web-Server Funktionsblöcke kann in einfacher Weise auf Parameter von Funktionsblöcken (z. B. outputs, set points, mode etc.) zugegriffen werden. Sie können auch dazu verwendet werden, die Komplexität von Funktionsblöcken für bestimmte Anwender zu verbergen, indem nur die für die spezielle Anwendung notwendigen Informationen auf den HTML-Seiten aufgenommen werden. Der Anwender sieht so am Browser nur die für ihn wichtigen Informationen.

Mit Hilfe der HTML-Seiten können auch die Informationen von Funktionsblöcken klar strukturiert werden, indem Konfigurationsdaten und Diagnosedaten auf getrennten Seiten publiziert werden.

## Patentansprüche

1. Vorrichtung für Feldgeräte (F1, F2, F3, F4) der Prozessautomatisierungstechnik mit einem Funktionsblock (FB), der dem Foundation Fieldbus Standard entspricht, mit einem Web-Server, mit einem Web-Browser und mit einer Steuereinheit (WS1), wobei der Funktionsblock (FB) in eine Komponente (F1, F2, F3, F4, GS1) eines Feldbusses, der nach dem Fieldbus Foundation Standard arbeitet, geladen ist und mit anderen Funktionsblöcken (PID, AI, AO, OSDL) verknüpft ist, wobei in den Funktionsblock (FB) der Web-Server integriert ist, der Informationen in einer allgemeinen Beschreibungssprache, insbesondere HTML, zur Verfügung stellt, wobei der Web-Browser ein Browser-Fenster aufweist, wobei die Steuereinheit (WS1) mit Hilfe des Web-Browsers auf den Funktionsblock (FB) zugreift und wobei mit Hilfe des Web-Browers neben Konfigurationsinformationen auch Diagnoseinformationen von den anderen Funktionsblöcken (PID, AI, AO, OSDL), die mit dem Funktionsblock (FB) verknüpft sind, abrufbar und abänderbar sind.

2. Vorrichtung nach Anspruch 1, **dadurch gekennzeichnet, daß** der Funktionsblock als "Flexible Function Block" ausgebildet ist.

3. Vorrichtung nach einem der vorhergehenden Ansprüche, **dadurch gekennzeichnet, daß** der Funktionsblock (FB) in ein Feldgerät (F1, F2, F3, F4) oder in einen Controller (G1) geladen ist.

4. Vorrichtung nach Anspruch 1 oder 3,
wobei die Steuereinheit (WS1, WS2) mit der Komponente (F1, F2, F3, F4, GS1) des Feldbusses, in der der Web-Server Funktionsblock (FB) abgespeichert ist, über ein Netzwerk der Prozessautomatisierungstechnik verbunden ist.

5. Vorrichtung nach Anspruch 1,
wobei weitere Funktionsblöcke (FB2, FB3) mit integriertem Web-Server vorgesehen sind und wobei diese Verknüpfungen zu den anderen Web-fähigen Funktionsblöcken im Web-Browser als Hyperlinks dargestellt sind, so dass der Anwender durch Anklicken dieser Hyperlinks zu weiteren Funktionsblöcken (FB2, FB3) geführt wird, deren Information im Browser Fenster angezeigt wird.

## Claims

1. Unit for field devices (F1, F2, F3, F4) used in process automation engineering with a function block (FB), which meets the Foundation Fieldbus Standard, with a Web server, with a Web browser and with a control unit (WS1), where the function block (FB) is loaded into a component (F1, F2, F3, F4, GS1) of a fieldbus, which operates according to the Fieldbus Foundation Standard, and is linked to other function blocks (PID, AI, AO, OSDL), **characterized in that** the Web server is integrated into the function block (FB), said Web server making information available in a general description language, particularly HTML; where the Web browser exhibits a browser window; where the control unit (WS1) accesses the function block (FB) with the aid of the Web browser; and where, with the aid of the Web browser, it is possible to call up and modify diagnostic information and configuration information from the other function blocks (PID, AI, AO, OSDL) which are linked to the function block (FB).

2. Unit as per Claim 1, **characterized in that** the function block is designed as a "flexible function block".

3. Unit as per one of the previous claims, **characterized in that** the function block (FB) is loaded into a field device (F1, F2, F3, F4) or into a controller (G1).

4. Unit as per Claim 1 or 3, **characterized in that** the control unit (WS1, WS2) is connected to the component (F1, F2, F3, F4, GS1) of the fieldbus - in which the Web server function block (FB) is stored - via a process automation engineering network.

5. Unit as per Claim 1, **characterized in that** additional function blocks (FB2, FB3) are provided with an integrated Web server, and **in that** these links to the other Web-enabled function blocks are displayed in the Web browser as hyperlinks such that the user is guided to additional function blocks (FB2, FB3) by clicking these hyperlinks, and the information of these function blocks is displayed in the browser window.

## Revendications

1. Dispositif destiné aux appareils de terrain (F1, F2, F3, F4) de la technique d'automatisation des processus avec un bloc fonctionnel (FB), qui correspond au standard Foundation Fieldbus, avec un serveur Web, avec un navigateur Web et avec une unité de commande (WS1), le bloc fonctionnel (FB) étant chargé dans un composant (F1, F2, F3, F4, GS1) d'un bus de terrain, qui fonctionne d'après le standard Foundation Fieldbus, et est combiné avec d'autres blocs fonctionnels (PID, AI, AO, OSDL), le serveur Web étant intégré dans le bloc fonctionnel (FB), qui met à disposition des informations dans un langage de description général, notamment HTML, le navigateur Web comportant une fenêtre de navigateur, l'unité de commande (WS1) accédant au bloc fonctionnel (FB) à l'aide du navigateur Web et, outre les informations de configuration, les informations de diagnostic pouvant également être appelées et modifiées à l'aide du navigateur Web par les autres blocs fonctionnels (PID, AI, AO, OSDL), qui sont combinés avec le bloc fonctionnel (FB).

2. Dispositif selon la revendication 1, **caractérisé en ce que** le bloc fonctionnel (FB) est conçu en tant que "bloc fonctionnel flexible".

3. Dispositif selon l'une des revendications précédentes, **caractérisé en ce que** le bloc fonctionnel (FB) est chargé dans un appareil de terrain (F1, F2, F3, F4) ou dans un contrôleur (G1).

4. Dispositif selon la revendication 1 ou 3,
pour lequel l'unité de commande (WS1, WS2) est reliée par l'intermédiaire d'un réseau de la technique d'automatisation des processus avec le composant (F1, F2, F3, F4, GS1) du bus de terrain, dans lequel le bloc fonctionnel (FB) avec serveur Web est enregistré.

5. Dispositif selon la revendication 1,
pour lequel sont prévus d'autres blocs fonctionnels (FB2, FB3) avec serveur Web intégré et pour lequel ces combinaisons avec les autres blocs fonctionnels compatibles Web sont représentées en tant qu'hyperliens dans le navigateur Web, si bien que l'utilisateur cliquant sur ces hyperliens est guidé vers d'autres blocs fonctionnels (FB2, FB3), dont les informations sont affichées dans la fenêtre du navigateur.
